## Europäisches Patentamt
## European Patent Office
## Office européen des brevets

(19)

(11) Numéro de publication: **0 011 018**
**A1**

(12)
# DEMANDE DE BREVET EUROPEEN

(21) Numéro de dépôt: 79400778.1

(22) Date de dépôt: 22.10.79

(51) Int. Cl.³: **H 04 Q 1/457**

(30) Priorité: 27.10.78 FR 7830574

(43) Date de publication de la demande: 14.05.80
Bulletin 80/10

(84) Etats contractants désignés: BE DE GB IT NL SE

(71) Demandeur: **LE MATERIEL TELEPHONIQUE THOMSON-CSF S.A., 146 Boulevard de Valmy, F-92707 Colombes Cedex (FR)**

(72) Inventeur: **Guyot, Gilbert Camille THOMSON-CSF, Service des Brevets 46 Quai Alphonse Le Gallo, F-92103 Boulogne-Billancourt Cedex (FR)**

(74) Mandataire: **Schaub, Bernard et al, LE MATERIEL TELEPHONIQUE THOMSON-CSF Service des Brevets 46 Quai Alphonse Le Gallo, F-92103 Boulogne Billancourt Cedex (FR)**

(54) Dispositif et procédé de reconnaissance pour récepteur numérique de signaux multifréquences.

(57) Le dispositif de reconnaissance est destiné à coopérer avec des moyens de filtrage qui traitent de manière indépendante des séquences d'entrée successives de N échantillons prélevées sur les signaux multifréquences. Il comporte des premiers moyens (9) et des deuxièmes moyens (10) pour contrôler la validité des niveaux des signaux multifréquences, des troisièmes moyens (11) pour contrôler la validité dans le temps des signaux multifréquences et des quatrièmes moyens (12) pour déterminer la prochaine étape du procédé de reconnaissance.

Application aux centraux téléphoniques.

## DISPOSITIF ET PROCEDE DE RECONNAISSANCE POUR RECEPTEUR NUMERIQUE DE SIGNAUX MULTIFREQUENCES.

La présente invention concerne un dispositif de reconnaissance pour récepteur numérique de signaux multifréquences à modulation par impulsions codées, destiné notamment à un central téléphonique à commutation temporelle.

On entend par signaux multifréquences les signaux transmis entre centraux téléphoniques ou entre postes d'abonnés et centraux téléphoniques et comportant les informations de signalisation, (notamment la numérotation) nécessaires à l'établissement des appels téléphoniques. Ces informations de signalisation sont généralement constituées par une combinaison de deux fréquences choisies parmi six ou huit fréquences prédéterminées formant un code multifréquences, tel que le code "MF SOCOTEL" et le code "R2" pour la signalisation entre centraux téléphoniques ou le code "Clavier" pour la signalisation entre postes d'abonnés et centraux téléphoniques.

Un récepteur de signaux multifréquences comporte classiquement deux parties ayant des fonctions distinctes : une première partie, dite de filtrage, apte à effectuer une analyse spectrale des signaux multifréquences reçus par le récepteur et une seconde partie, dite de reconnaissance, apte à établir une distinction, dans la composition spectrale des signaux multifréquences fournie par les moyens de filtrage, entre les fréquences dues à la signalisation et les fréquences dues à des perturbations.

Ces perturbations peuvent être dues notamment :
- à des émissions ou à des coupures parasites, de durée brève mais pouvant être interprétées par les moyens de filtrage comme un établissement ou une retombée des fréquences de signalisation,
- à des réjections provenant par exemple de l'émetteur associé au récepteur dans le cas d'un échange de signalisation entre centraux, les fréquences émises par l'émetteur pouvant être considérées par les moyens de filtrage comme des fréquences de signalisation reçues,
- à du bruit réparti de façon uniforme dans le spectre téléphonique mais pouvant être interprété par les moyens de filtrage comme une présence de signalisation dans le cas de signaux multifréquences de faible amplitude,
- à l'imperfection des moyens de filtrage,
- à la présence d'harmoniques des fréquences de signalisation ou de

frequences d'intermodulation entre les fréquences de signalisation dans les signaux reçus par le récepteur qui, combinée avec l'imperfection des moyens de filtrage, peut donner lieu à des résultats erronés.

C'est le Cahier des Charges qui fixe les critères de reconnaissance, c'est-à-dire les critères de niveaux et de temps à partir desquels le dispositif de reconnaissance fait la distinction entre fréquences de signalisation et fréquences de perturbation.

Le Cahier des Charges fixe notamment :

- un seuil minimum pour les amplitudes des composantes spectrales des signaux multifréquences,
- un écart maximum entre la première et la deuxième amplitude de plus grande valeur parmi les amplitudes des composantes spectrales des signaux multifréquences,
- une durée minimum de présence ou d'absence des composantes spectrales.

Si toutes ces conditions sont vérifiées pour une composition spectrale donnée, les deux fréquences correspondant à la première et à la deuxième amplitude de plus grande valeur sont reconnues par le dispositif de reconnaissance comme étant les fréquences de signalisation reçues.

Dans les récepteurs numériques de signaux multifréquences connus, le dispositif de reconnaissance coopère avec des moyens de filtrage numérique qui traitent de façon continue le signal d'entrée du récepteur, c'est-à-dire qui fournissent au dispositif de reconnaissance des signaux de sortie dont l'état à un instant donné dépend des états antérieurs de ces signaux. L'état des signaux de sortie de ces moyens de filtrage à un instant donné est alors entaché des perturbations éventuelles présentes sur le signal d'entrée du récepteur à des instants antérieurs. Par conséquent, un dispositif de reconnaissance coopérant avec de tels moyens de filtrage ne peut fournir de résultats fiables.

La présente invention a pour objet de remédier à cet inconvénient. En effet, l'objet de l'invention est un dispositif de reconnaissance pour récepteur numérique de signaux multifréquences dans lequel les moyens de filtrage numérique traitent indépendamment l'une de l'autre des séquences d'entrée successives de N échantillons numériques prélevés sur une même voie v des signaux multifréquences et sont aptes à fournir au dispositif de reconnaissance, en réponse à une séquence d'entrée donnée, Q séquences de sortie simultanées de M échantillons numériques, M étant le nombre d'échantillons nécessaires au traitement de la voie v par le dispositif de reconnaissance (M > N), dont M—N échantillons numériques sinusoïdaux de fréquence $f_q$, $f_q$ étant l'une des Q fréquences du code multifréquences.

Les moyens de filtrage qui traitent indépendamment l'une de l'autre des séquences d'entrée de N échantillons numériques peuvent être notamment :

- des moyens de filtrage numérique temporel constitués par une fenêtre de troncature de largeur égale à NT (où T désigne la période d'échantillonnage des signaux multifréquences), réouverte de manière récursive aux instants MT > NT, associés à des moyens de filtrage numérique fréquentiel constitués par Q résonateurs parfaits en parallèle qui reçoivent les signaux issus de la fenêtre de troncature et qui sont accordés chacun sur une fréquence $f_q$ du code multi-fréquences, les circuits de retard des résonateurs parfaits étant remis à zéro de manière récursive aux instants MT > NT ;

- des moyens de traitement numérique constitués par un calculateur de la transformée de Fourier discrète et par un dispositif permettant de calculer l'amplitude des valeurs discrètes du spectre à partir des échantillons du temps ;

- des moyens de filtrage numérique fréquentiel constitués par des filtres d'affaiblissement récursifs ou non-récursifs, remis à zéro de manière récursive aux instants MT.

Un autre inconvénient des dispositifs de reconnaissance connus est que ces systèmes permettent de reconnaître uniquement des combinaisons de fréquences appartenant à un code multifréquences donné.

La présente invention a également pour objet de remédier à cet inconvénient en proposant un dispositif de reconnaissance apte à reconnaître des combinaisons de fréquences appartenant à des codes multifréquences pouvant varier d'une voie à une autre et, pour une voie donnée, d'un échantillon à un autre.

Selon une caractéristique de l'invention, le dispositif de reconnaissance comporte :

- des premiers moyens pour contrôler, pour chaque voie v, la validité, par rapport à un seuil de détection donné, de la valeur crête des échantillons numériques sinusoïdaux des Q séquences de sortie ;

- des deuxièmes moyens pour contrôler, pour chaque voie v, la validité, par rapport à un écart maximum et à un écart minimum donnés, des écarts respectifs entre la première et la deuxième, et entre la deuxième et la troisième valeurs crêtes de plus grandes valeurs parmi
les Q séquences de sortie ;

- des troisièmes moyens pour analyser, pour chaque voie v, P résultats
successifs obtenus par les premiers et les deuxièmes moyens sur les P
séquences d'entrée successives de N échantillons les plus récentes,
ces troisièmes moyens étant aptes à indiquer la combinaison de
fréquences ayant été reconnue sur ces P séquences d'entrée, l'analyse
de ces P séquences d'entrée ayant pour but de s'affranchir des
émissions et des coupures parasites ;

- des quatrièmes moyens pour déterminer, en fonction des résultats
fournis par les troisièmes moyens sur la voie v et de l'état actuel
d'analyse de la voie v, le prochain état d'analyse de la voie v,
c'est-à-dire le prochain nombre N' d'échantillons numériques à
prendre en compte par les moyens de filtrage et le prochain nombre P'
de séquences d'entrée successives de N' échantillons numériques à
prendre en compte par les troisièmes moyens, et pour autoriser les
troisièmes moyens à indiquer la combinaison de fréquences ayant été
reconnue ;

- des cinquièmes moyens pour activer successivement, pour le traitement
de chaque voie v par le dispositif de reconnaissance, les premiers,
les deuxièmes, les troisièmes et les quatrièmes moyens en fonction
du numéro m ($1 \leqslant m \leqslant M$) de l'échantillon des Q séquences de sortie
reçu par le dispositif de reconnaissance puis, lorsque m est égal à M,
pour activer les moyens de filtrage pour le traitement de la séquence
d'entrée suivante.

Selon une autre caractéristique de l'invention, les premiers, les
deuxièmes, les troisièmes, les quatrièmes et les cinquièmes moyens sont
entièrement réalisés en logique câblée et comportent des mémoires mortes,
aptes à fournir, selon le code multifréquences reçu, des spécifications
particulières à ce code, ce qui permet d'avoir une réalisation unique
utilisable quel que soit le code multifréquences reçu.

Les objets et caractéristiques de l'invention apparaîtront plus
clairement à la lecture de la description suivante d'un exemple de
réalisation, ladite description étant faite en relation avec les
dessins ci-annexés dans lesquels :

- la figure 1 est un schéma synoptique d'un récepteur numérique
de signaux multifréquences comportant un dispositif de reconnaissance
conforme à l'invention,

- la figure 2 est un schéma synoptique d'un dispositif de reconnaissance conforme à l'invention,

- la figure 3 est un schéma des premiers moyens mis en oeuvre par le dispositif de reconnaissance selon l'invention,

- la figure 4 est un schéma des deuxièmes moyens mis en oeuvre par le dispositif de reconnaissance selon l'invention,

- la figure 5 est un schéma des troisièmes moyens mis en oeuvre par le dispositif de reconnaissance selon l'invention,

- la figure 6 est un schéma des quatrièmes moyens mis en oeuvre par le dispositif de reconnaissance selon l'invention,

- la figure 7 est un schéma des cinquièmes moyens mis en oeuvre par le dispositif de reconnaissance selon l'invention,

- la figure 8 est un diagramme des temps des signaux d'horloge nécessaires au fonctionnement du dispositif de reconnaissance selon l'invention,

- la figure 9 montre le déroulement du procédé de reconnaissance mettant en oeuvre un dispositif de reconnaissance conforme à l'invention,

- les figures 10a, 10b et 10c illustrent le procédé de reconnaissance à l'aide de diagrammes des temps des signaux multifréquences.

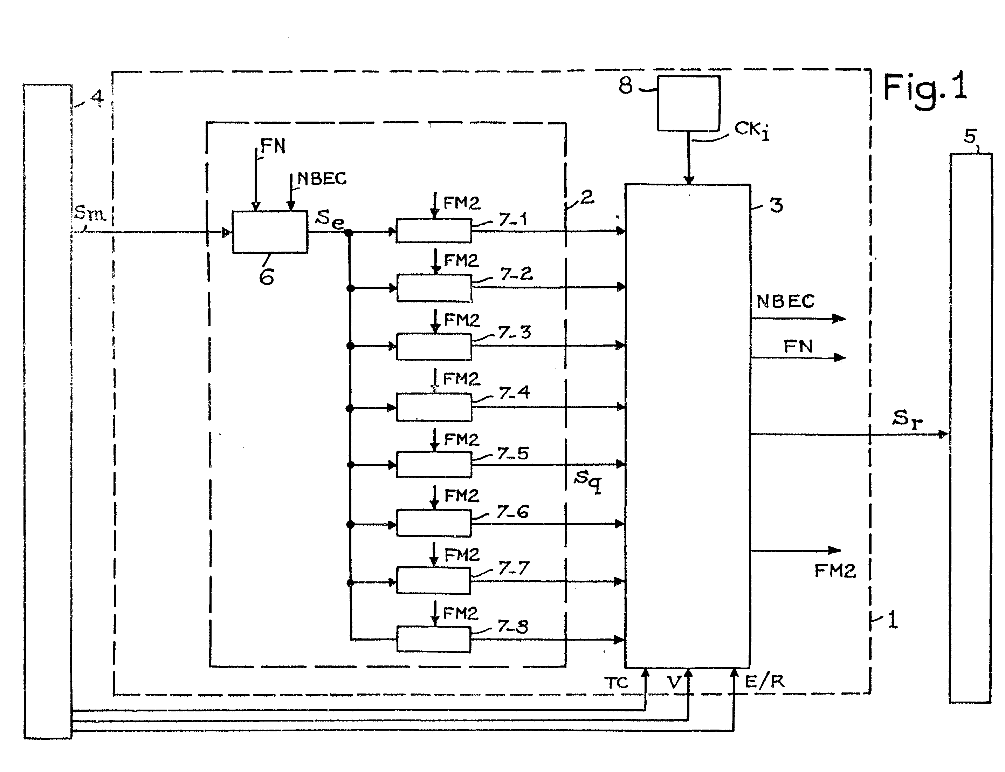

A titre d'exemple, les figures 1 à 8 sont faites dans le cas Q = 8, ce qui correspond à un récepteur capable de détecter les fréquences des trois codes multifréquences précités : "MF SOCOTEL", "R2", et "Clavier".

En effet, le code "MF SOCOTEL" est un code du type asservi comportant six fréquences, dites fréquences de code, et une fréquence, dite fréquence de contrôle, telles que, lors d'un échange de signalisation entre deux centraux, le central qui fonctionne en émission de fréquences de code fonctionne également en réception de fréquence de contrôle et inversement, le central qui fonctionne en réception de fréquences de code fonctionne également en émission de fréquence de contrôle. Les fréquences de code du code "MF SOCOTEL" sont les suivantes : 700 Hz, 900 Hz, 1100 Hz, 1300 Hz, 1500 Hz, 1700 Hz et la fréquence de contrôle a pour valeur 1900 Hz. Dans le cas du code "MF SOCOTEL", les signaux multifréquences sont constitués soit par la fréquence de contrôle, soit par la combinaison de deux fréquences de code.

Le code "R2" est un code du type "asservi" qui comporte deux groupes de six fréquences : les fréquences 1380 Hz, 1500 Hz, 1620 Hz, 1740 Hz, 1860 Hz, et 1980 Hz qui définissent le code "R2 Avant" et les fréquences 540 Hz, 660 Hz, 780 Hz, 900 Hz, 1020 Hz et 1140 Hz qui définissent le code "R2 Arrière". Lors d'un échange de signalisation entre deux centraux, le central qui fonctionne en émission de code "R2 Avant" fonctionne également en réception de code "R2 Arrière" et inversement le central qui fonctionne en réception de code "R2 Avant" fonctionne également en émission de code "R2 Arrière". Dans le cas du code R2, les signaux multifréquences sont constitués soit par la combinaison de deux fréquences du code "R2 Avant", soit par la combinaison de deux fréquences du code "R2 Arrière".

Le code "Clavier" comporte un groupe de fréquences basses : 697 Hz, 770 Hz, 852 Hz et 941 Hz et un groupe de fréquences hautes : 1209 Hz, 1336 Hz, 1477 Hz et 1633 Hz. Dans le cas du code "Clavier", les signaux multifréquences sont constitués par la combinaison d'une fréquence haute et d'une fréquence basse.

En choisissant la valeur $Q = 8$, on considère donc que le récepteur numérique est capable de détecter les fréquences de quatre types de code : "MF SOCOTEL", "R2 Avant", "R2 Arrière" et "Clavier".

Sur la figure 1, on voit que le récepteur numérique de signaux multifréquences 1 comporte des moyens de filtrage numérique 2 coopérant avec un dispositif de reconnaissance 3. Ce récepteur reçoit des informations en provenance d'un signaleur via une interface d'entrée 4 entre le signaleur et le récepteur et émet des informations vers le signaleur via une interface de sortie 5 entre le récepteur et le signaleur. Les moyens de filtrage 2 reçoivent de l'interface d'entrée 4 des signaux multifréquences $S_m$ à modulation par impulsions codées constitués par des échantillons numériques multiplexés dans le temps.

Selon une réalisation préférée de l'invention, les moyens de filtrage 2 sont constitués premièrement par une fenêtre de troncature 6 de largeur égale à NT (où T désigne la période d'échantillonnage des signaux multifréquences) qui répartit les échantillons numériques des signaux multifréquences $S_m$ correspondant à une même voie v en séquences d'entrée $S_e$ successives et indépendantes de N échantillons numériques, deuxièmement par huit résonateurs parfaits en parallèle 7-1 à 7-8 accordés chacun sur une fréquence $f_q$ ($1 \leqslant q \leqslant 8$) du code multifréquences, qui reçoivent les signaux fournis par la fenêtre de troncature et qui sont aptes à fournir, en réponse à une séquence d'entrée $S_e$ donnée, Q séquences de sortie simultanées $S_q$ comportant une zone de régime oscillatoire transitoire de N échantillons numériques suivie d'une zone de régime sinusoïdal permanent pouvant comporter un nombre illimité d'échantillons numériques sinusoïdaux de fréquences $f_q$, $f_q$ étant l'une

des huit fréquences du code multifréquences présente sur la voie v.

Le dispositif de reconnaissance 3 a pour but de reconnaître les fréquences de signalisation réellement reçues parmi les fréquences $f_q$ détectées par les moyens de filtrage numériques ; il fournit à l'interface de sortie 5 un signal $S_r$ indiquant la combinaison de fréquences reconnue.

Pour que le traitement par les moyens de filtrage soit fait de manière indépendante sur les séquences d'entrée successives, il est nécessaire de remettre à zéro les circuits de retard des résonateurs parfaits en fin de traitement, par le dispositif de reconnaissance, des séquences de sortie correspondant à chaque séquence d'entrée. Le traitement d'une voie v par le dispositif de reconnaissance nécessitant un nombre M d'échantillons supérieur à N, ces circuits de retard sont remis à zéro par le signal FM2 lorsque le numéro m de l'échantillon de la voie v traitée par le dispositif de reconnaissance atteint la valeur M.

Conformément à l'invention, le dispositif de reconnaissance réagit également sur les moyens de filtrage en indiquant à la fenêtre de troncature, au moyen d'un signal NBEC et d'un signal FN, le prochain nombre N' d'échantillons numériques à prendre en compte et le prochain type de troncature à utiliser par les moyens de filtrage pour le traitement de la prochaine séquence d'entrée. Ceci permet de faire varier la précision des moyens de filtrage en modifiant la largeur et le type de la fenêtre de troncature (la précision augmentant lorsque la largeur de la fenêtre de troncature augmente).

Le type de code multifréquences reçu pouvant varier d'une voie à l'autre et, pour une voie donnée, d'un échantillon à l'autre, et les critères du Cahier des Charges variant avec le type de code multifréquences, il est nécessaire de fournir au dispositif de reconnaissance un signal TC indiquant le type de code multifréquences correspondant à chaque échantillon traité. C'est l'interface d'entrée 4 qui fournit ce signal TC.

De plus, il est nécessaire de fournir au dispositif de reconnaissance un signal E/R d'émission-réception lui indiquant s'il doit reconnaître les fréquences "de code" ou la fréquence "de contrôle" dans le cas du code "MF SOCOTEL". C'est l'interface d'entrée 4 qui fournit ce signal E/R.

D'autre part, pour assurer le traitement en multiplexage dans le temps par le dispositif de reconnaissance, il est nécessaire de fournir à ce dernier un signal V indiquant le numéro de la voie à laquelle appartient l'échantillon qu'il traite.

Il est prévu un séquenceur 8 qui fournit les signaux d'horloge $CK_i$ nécessaires au fonctionnement du dispositif de reconnaissance.

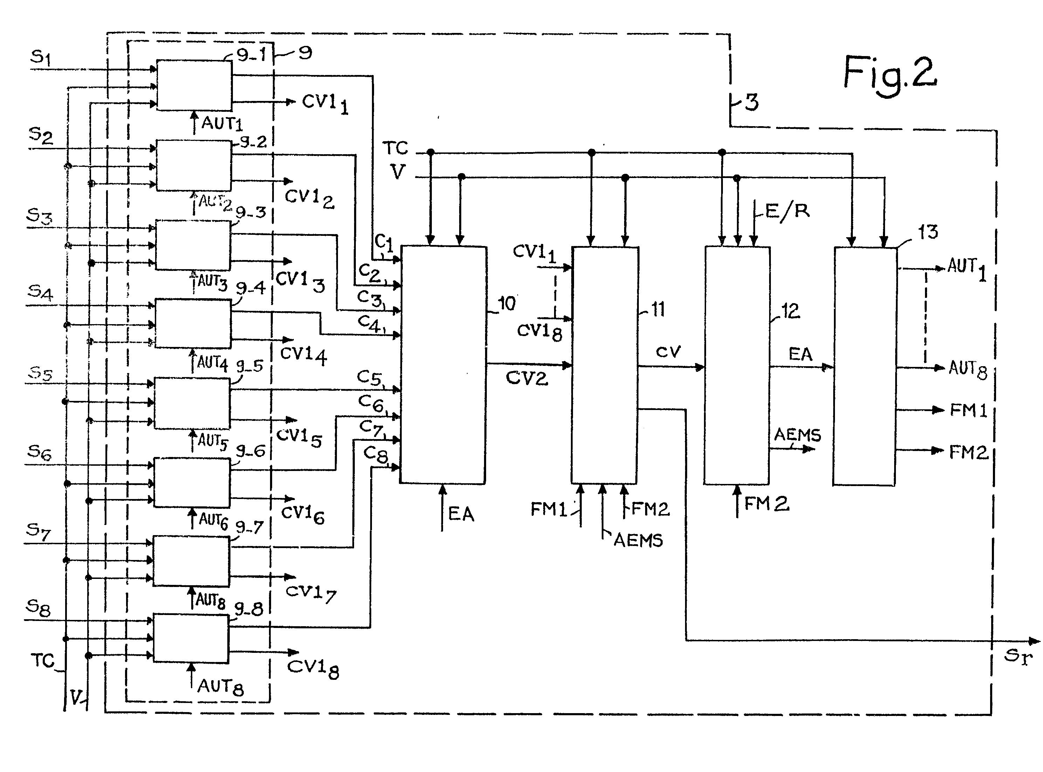

Si l'on se réfère maintenant à la figure 2, on voit que le dispositif de reconnaissance comporte des premiers moyens 9, des deuxièmes moyens 10, des troisièmes moyens 11, des quatrièmes moyens 12 et des cinquièmes moyens 13. Pour permettre le fonctionnement du dispositif de reconnaissance en multiplexage dans le temps, chacun de ces moyens reçoit le signal V indiquant le numéro de la voie v traitée actuellement par le dispositif de reconnaissance. Chacun de ces moyens reçoit également le signal TC relatif au type de code multifréquences reçu sur la voie v.

Les premiers moyens 9 comportent huit circuits identiques 9-1 à 9-8, le circuit 9-q étant apte à recevoir la séquence de sortie $S_q$. Chaque circuit 9-q reçoit un signal $AUT_q$ d'activation des premiers moyens fournis par les cinquièmes moyens 13. Chaque circuit 9-q est apte à fournir aux deuxièmes moyens 10 un signal $C_q$ indiquant la valeur crête des échantillons numériques sinusoïdaux de la séquence de sortie $S_q$, et aux troisièmes moyens 11 un signal $CVI_q$ indiquant la validité, par rapport à un seuil de détection donné, de la valeur crête des échantillons numériques sinusoïdaux de la séquence de sortie $S_q$.

Les deuxièmes moyens 10 ont pour but de détecter la validité, par rapport à un écart maximum et à un écart minimum donnés, des écarts respectifs entre la première et la deuxième, et entre la deuxième et la troisième valeurs crêtes de plus grandes valeurs parmi les Q séquences de sortie. Cette validité est indiquée par un signal CV2 fourni aux troisièmes moyens 11. Les deuxièmes moyens 10 sont activés à la réception des signaux $C_q$.

Les troisièmes moyens 11 ont pour but d'analyser P valeurs successives des signaux CV2 et $CVI_1$ à $CVI_8$ correspondant aux P séquences d'entrée successives les plus récentes et sont aptes à indiquer selon l'état d'analyse de la voie v, la combinaison de fréquences ayant été reconnue par les premiers et les deuxièmes moyens sur ces P séquences d'entrée. Les troisièmes moyens sont activés par des signaux FM1 et FM2 fournis par les cinquièmes moyens, en ce qui concerne l'analyse des P valeurs successives des signaux CV2 et $CVI_1$ à $CVI_8$, et par un signal AEMS fourni par les quatrièmes moyens en ce qui concerne l'indication de la combinaison de fréquences reconnue. C'est le signal $S_r$ fourni par les troisièmes moyens qui indique à l'interface de sortie la combinaison de fréquences ayant été reconnue par le dispositif de reconnaissance. D'autre part les troisièmes moyens fournissent aux quatrièmes moyens, quel que soit l'état d'analyse de la voie v, un signal CV indiquant le résultat de l'analyse de la voie v par les troisièmes moyens.

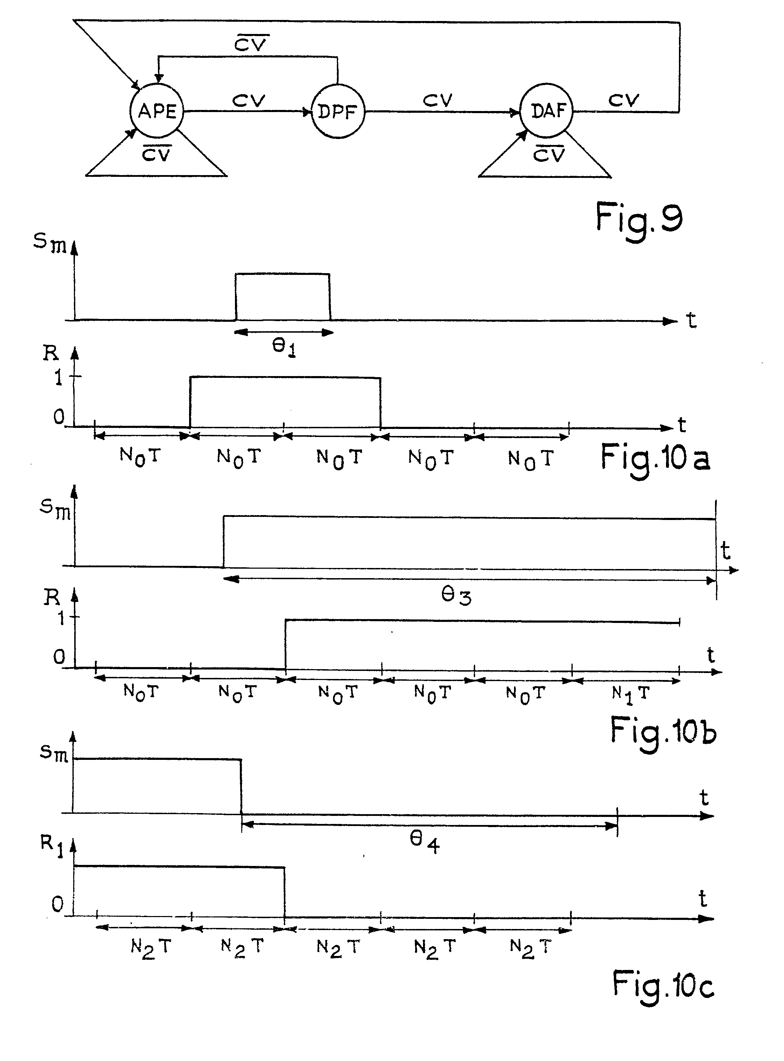

Les quatrièmes moyens 12 ont pour but de déterminer, en fonction de l'état actuel d'analyse de la voie v (indiqué par un signal EA) et de la valeur du signal CV, le prochain état d'analyse de la voie v. Un état d'analyse est défini premièrement par un nombre N d'échantillons numériques à prendre en compte pour former une séquence d'entrée relative à une voie donnée, c'est-à-dire encore par une largeur de fenêtre de troncature donnée, deuxièmement par un type de troncature donné, troisièmement par un nombre P de séquences d'entrée successives de N échantillons à prendre en compte par les troisièmes moyens pour le type de troncature donné. Le procédé de reconnaissance d'un code multifréquences comporte une succession d'états d'analyse définis par des valeurs N et P déterminées d'après les critères du Cahier des Charges. Cette succession d'états sera décrite ultérieurement en relation avec la figure 9. Les quatrièmes moyens fournissent aux deuxièmes et aux cinquièmes moyens le signal EA et aux troisièmes moyens le signal AEMS.

Les cinquièmes moyens 13 ont pour but d'activer successivement, pour le traitement d'une voie v par le dispositif de reconnaissance, les premiers, les deuxièmes, les troisièmes et les quatrièmes moyens en fonction du numéro m de l'échantillon des Q séquences de sortie reçu par le dispositif de reconnaissance puis, lorsque m est égal à M, de remettre à zéro les circuits de retard des résonateurs parfaits 7-1 à 7-8 par l'intermédiaire du signal FM2.

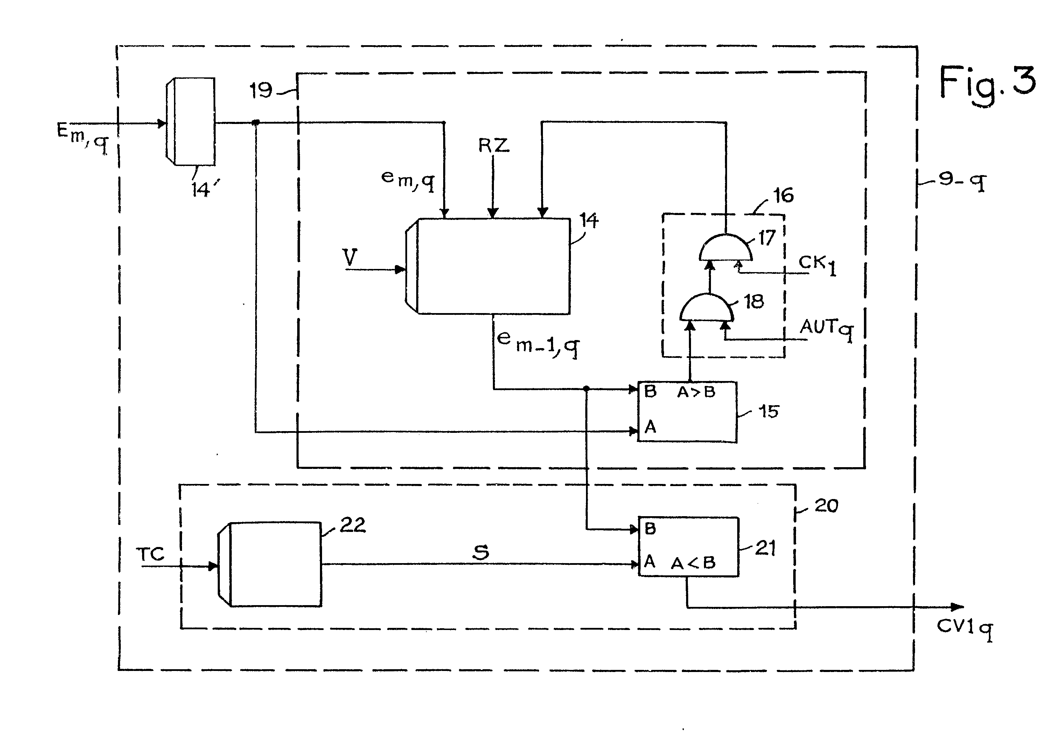

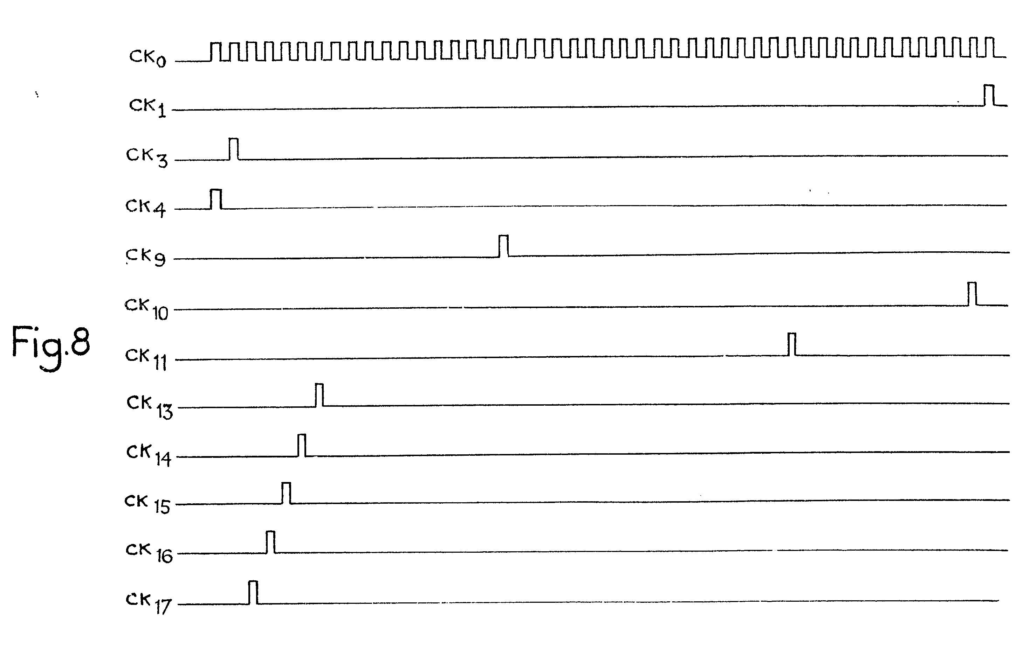

La figure 3 représente un schéma du circuit 9-q faisant partie des premiers moyens. Ce circuit comporte une mémoire vive 14, dite mémoire de plus grand échantillon, adressée par le signal V. Les données à écrire à un instant t donné dans la mémoire 14 sont constituées par les éléments binaires de l'échantillon numérique de numéro m : $e_{m,q}$ correspondant à l'échantillon numérique $E_{m,q}$ reçu à cet instant sur la séquence de sortie $S_q$ et codé en décibels au moyen d'un circuit de codage 14'. Ce codage en décibels permet de réduire le nombre d'éléments binaires représentant les échantillons reçus. Un comparateur 15 à deux entrées A et B reçoit sur son entrée A l'échantillon $e_{m,q}$ et sur son entrée B les données lues dans la mémoire 14 correspondant à l'échantillon numérique de numéro m-1 : $e_{m-1,q}$ reçu à l'instant t-T sur la séquence de sortie $S_q$. La mémoire 14 est validée en écriture par le signal de sortie d'un circuit de coïncidence 16 comportant une porte "ET" 17 entre un signal d'horloge $CK_1$ (visible sur la figure 8) et le signal de sortie d'une porte "ET" 18 entre le signal $AUT_q$ et le signal fourni par la sortie A > B du comparateur 15. L'ensemble formé par la mémoire 14, le comparateur 15 , les portes "ET" 17 et 18 constitue un circuit 19 de détection de la valeur crête des échantillons numériques sinusoïdaux de chaque voie v de la séquence de sortie $S_q$. En effet, lorsque le régime transitoire des moyens de filtrage est terminé (c'est-à-dire lorsque m est égal à N) le signal $AUT_q$ est actif et lorsque l'amplitude de l'échantillon $e_{m,q}$ est supérieure à l'amplitude de l'échantillon $e_{m-1,q}$, l'échantillon $e_{m,q}$ est inscrit dans la mémoire de plus grand échantillon à la place de l'échantillon $e_{m-1,q}$, cette inscription se faisant à l'impulsion du signal d'horloge $CK_1$. On voit donc qu'au bout d'un certain temps, les données lues dans la mémoire 14 ne seront plus modifiées et représenteront par conséquent la valeur crête $C_q$ cherchée. Pendant le régime transitoire des moyens de filtrage (c'est-à-dire pendant que m est inférieur à N), la mémoire 14 est remise à zéro, par l'intermédiaire d'un signal RZ.

Le circuit 9-q comporte également un circuit 20 de détection de validité, par rapport au seuil de détection S donné, de la valeur crête obtenue en sortie de la mémoire 14. Ce circuit comporte un comparateur 21 à deux entrées A et B qui reçoit sur son entrée B les données lues dans la mémoire 14 et sur son entrée A les données lues dans une mémoire morte 22, dite mémoire de seuil de détection, adressée par le signal TC relatif au type de code multifréquences reçu sur la voie v, les données lues dans la mémoire 22 représentant le seuil de détection S. C'est le Cahier des Charges qui fixe la valeur de S en fonction du type de code multifréquences. La sortie A < B du comparateur 21 fournit un signal $CVI_q$ qui est dans un premier état lorsque la condition A < B est réalisée. Ce signal indique la validité par rapport au seuil de détection S, de la valeur crête des échantillons numériques sinusoïdaux de la voie v de la séquence de sortie $S_q$.

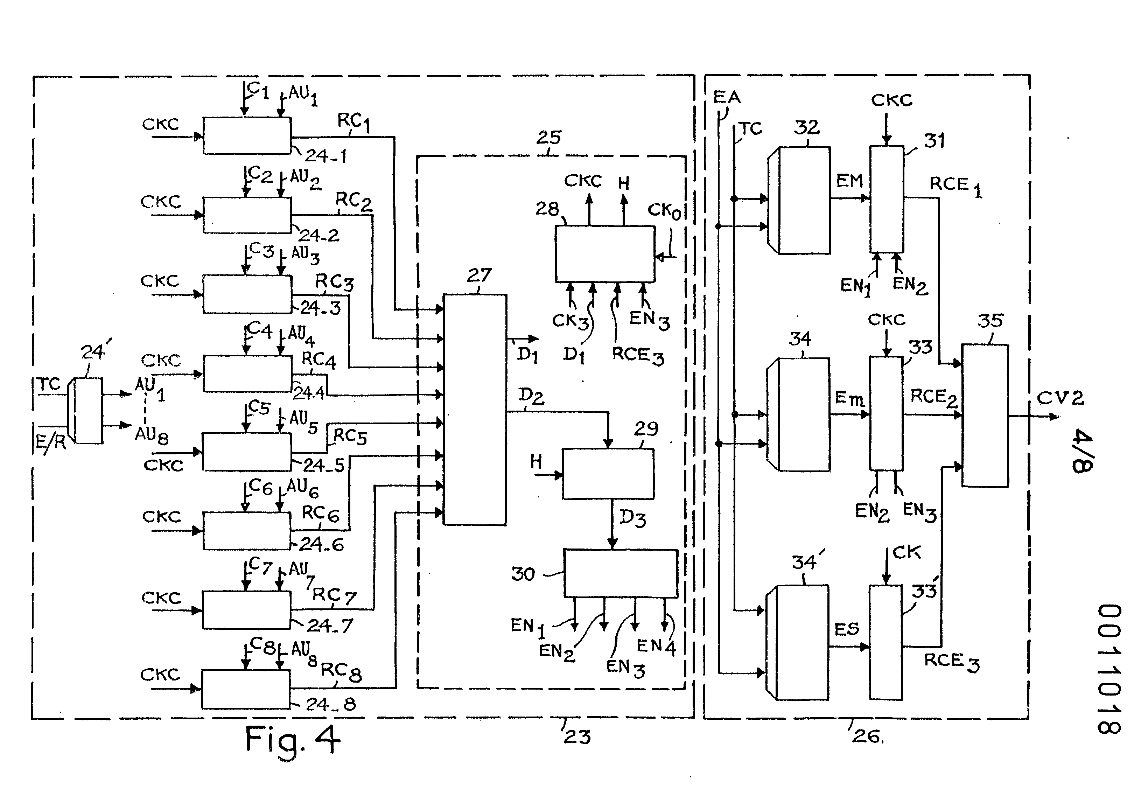

Si l'on se réfère maintenant à la figure 4, on voit que les deuxièmes moyens comportent d'une part un circuit 23 de détection de première, de deuxième et de troisième valeurs crêtes de plus grandes valeurs parmi les Q séquences de sortie, comportant lui-même huit compteurs identiques 24-1 à 24-8, dits compteurs de débordement, et un circuit de détection de débordements 25, d'autre part un circuit 26 de détection de validité, par rapport à un écart maximum et à un écart minimum donnés, des écarts respectifs entre lesdites première, deuxième et troisième valeurs crêtes. Le compteur de débordement 24-q est incrémenté par un signal d'horloge CKC, et chargé par le signal $C_q$ qui représente les données lues dans la mémoire 14, correspondant à la valeur crête détectée par le circuit 19. L'incrémentation du compteur de débordement 24-q est autorisée par le signal de sortie $AU_q$ d'une mémoire morte 24', dite mémoire de protection contre les fréquences de réjection adressée par les signaux TC et E/R. La sortie de débordement du compteur de débordement 24-q fournit un signal $RC_q$ qui change d'état lorsque la capacité de comptage de ce compteur est atteinte. Les compteurs de débordement 24-1 à 24-8 sont incrémentés par le même signal d'horloge CKC de sorte que l'ordre dans lequel les signaux $RC_q$ changent d'état donne le classement cherché pour les valeurs crêtes. Le circuit de détection de débordements 25 comporte un circuit 27 d'analyse des signaux $RC_1$ à $RC_8$ apte à fournir un signal $D_1$ indiquant qu'un au moins des signaux $RC_q$ a changé d'état, et un signal $D_2$ indiquant le nombre des signaux $RC_q$ ayant changé d'état simultanément.

Lorsqu'un au moins des signaux $RC_q$ a changé d'état, le signal $D_1$ agit sur un circuit d'horloge 28, qui fournit le signal d'horloge CKC, de manière à arrêter l'incrémentation des compteurs de débordement. Un générateur d'impulsions 29 chargé par le signal $D_2$ et activé par un signal d'horloge H fourni par le circuit d'horloge 28 émet alors un signal $D_3$ comportant un nombre d'impulsions égal au nombre de signaux $RC_q$ ayant changé d'état simultanément. Ces impulsions incrémentent un compteur 30. L'incrémentation des compteurs de débordement est alors reprise. Le compteur 30 fournit un signal $EN_1$ qui est actif lorsqu'il reçoit une première impulsion, un signal $EN_2$ qui est actif lorsqu'il reçoit une deuxième impulsion et un signal $EN_3$ qui est actif lorsqu'il reçoit une troisième impulsion. Le signal $EN_3$ agit sur le circuit d'horloge 28 de manière à bloquer les signaux d'horloge CKC et H. Les signaux CKC et H sont obtenus à partir d'un signal d'horloge de base $CK_0$ (visible sur la figure 8), d'un signal d'horloge $CK_3$ (visible également sur la figure 8), apte à activer les deuxièmes moyens, et des signaux $D_1$ et $EN_3$ précités. En dehors de leurs périodes de blocage les signaux H et CKC sont identiques au signal d'horloge $CK_0$. Le compteur 30

fournit également un signal $EN_4$ qui cesse d'être actif après la deuxième impulsion reçue par le compteur 30.

Le circuit 26 comporte un compteur 31, dit compteur d'écart maximum, chargé par les données EM lues dans une mémoire morte 32, dite mémoire d'écart maximum, adressée par un signal formé par la juxtaposition des signaux TC et EA relatifs respectivement au type de code reçu sur la voie v et à l'état actuel d'analyse de la voie v. Le compteur 31 se décrémente au rythme du signal d'horloge CKC, entre le moment où il est autorisé à se décrémenter par l'intermédiaire du signal $EN_1$ et le moment où sa décrémentation est arrêtée par l'intermédiaire du signal $EN_2$. Le compteur 31 fournit sur sa sortie de débordement un signal $RCE_1$ qui change d'état lorsque le compteur atteint la valeur zéro au cours de sa décrémentation, ce qui signifie que l'écart entre la première et la deuxième valeur crête est supérieur à l'écart maximum EM toléré par le Cahier des Charges. Le circuit 26 comporte également un compteur 33, dit compteur d'écart minimum, chargé par les données Em lues dans une mémoire morte 34, dite mémoire d'écart minimum, adressée par le même signal que la mémoire d'écart maximum 32. Le compteur 33 se décrémente au rythme du signal d'horloge CKC, entre le moment où il est autorisé à se décrémenter par l'intermédiaire du signal $EN_2$ et le moment où sa décrémentation est arrêtée par l'intermédiaire du signal $EN_3$. Le compteur 33 fournit sur sa sortie de débordement un signal $RCE_2$ qui change d'état lorsque ce compteur atteint la valeur zéro au cours de sa décrémentation, ce qui signifie que l'écart entre la deuxième et la troisième valeur crête est supérieur à l'écart minimum Em. Le circuit 26 comporte également un compteur 33', dit compteur d'écart par rapport au seuil de détection, chargé par les données ES lues dans une mémoire morte 34', dite mémoire d'écart par rapport au seuil de détection, adressée par le même signal que les mémoires mortes 32 et 34. Les données lues dans la mémoire morte 34' représentent l'écart entre la valeur maximum de la première valeur crête et le seuil de détection S.

Le compteur 33' se décrémente au rythme du signal d'horloge CKC et fournit sur sa sortie de débordement un signal $RCE_3$ qui change d'état lorsque ce compteur atteint la valeur zéro au cours de sa décrémentation, ce qui signifie que la sortie de débordement du compteur 33 n'a peut être pas encore changé d'état au cours de sa décrémentation car le niveau de la troisième valeur crête est inférieur au seuil de détection. Dans ce cas le signal $RCE_3$ est utilisé à la place du signal $EN_3$ pour bloquer les signaux d'horloge CKC et H.

Les signaux $RCE_1$, $RCE_2$ et $RCE_3$ constituent les signaux d'entrée d'un circuit 35 de prise en compte des résultats fournis par les compteurs 31, 33 et 33'. Le circuit 35 fournit un signal CV2 qui indique la validité, par rapport à l'écart maximum EM et à l'écart minimum Em, des écarts respectifs entre la première et la deuxième, et entre la deuxième et la troisième valeurs crêtes de plus grandes valeurs parmi les Q séquences de sortie, en tenant compte du fait que le signal $RCE_3$ doit être pris en compte à la place du signal $RCE_2$ en cas de débordement du compteur 33'.

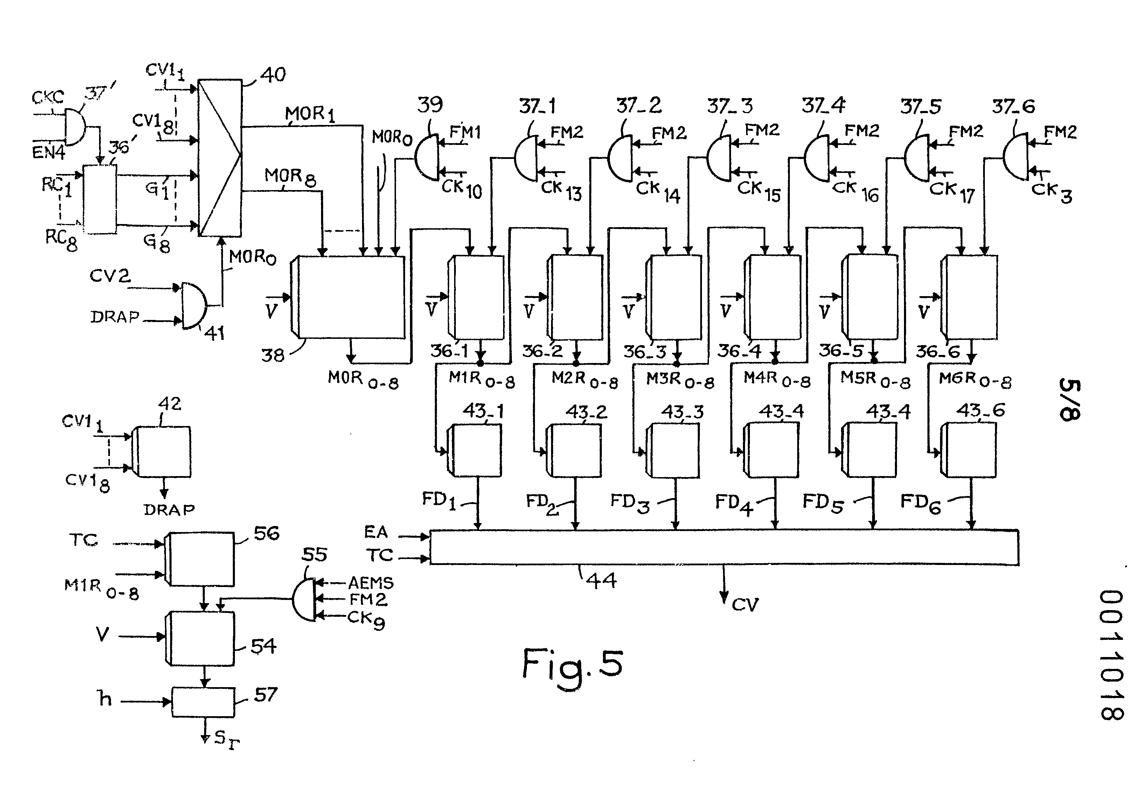

Si l'on se réfère à la figure 5, on voit que les troisièmes moyens comportent six mémoires vives 36-1 à 36-6, dites mémoires de résultats successifs, adressées par le signal V et validées en écriture respectivement par les signaux de sortie de six portes "ET" 37-1 à 37-6 entre un signal FM2 de validation des mémoires de résultats successifs et des signaux d'horloge $CK_3$ et $CK_{13}$ à $CK_{17}$ (visibles sur la figure 8). Les mémoires 36-1 à 36-6 sont connectées en série et validées en écriture de manière que les données lues dans la mémoire 36-r ($1 \leqslant r \leqslant 6$) constituent les données à écrire dans la mémoire 36-r+1.

Les données à écrire dans la mémoire 36-1 sont constituées par les données lues dans une mémoire vive 38, dite mémoire de contrôle de validité, adressée par le signal V et validée en écriture par le signal de sortie d'une porte "ET" 39 entre un signal FM1 de validation de la mémoire de contrôle de validité et un signal d'horloge $CK_{10}$ (visible sur la figure 8). Les données à écrire dans la mémoire de contrôle de validité sont constituées par les huit signaux de sortie $MOR_1$ à $MOR_8$ d'un multiplexeur 40 à seize entrées et par le signal de sortie $MOR_0$ d'une porte "ET" 41 à deux entrées dont le signal de sortie commande le multiplexeur 40. Les signaux d'entrée du multiplexeur 40 sont constitués d'une part par les signaux $CV1_1$ à $CV1_8$ (qui indiquent la validité, par rapport au seuil de détection S, de la valeur crête des Q séquences de sortie) d'autre part par des signaux $G_1$ à $G_8$.

Les signaux $G_1$ à $G_8$ sont constitués par les données lues dans un registre 36', dit registre de mémorisation des deux premiers débordements des compteurs 24-1 à 24-8. Les signaux $RC_1$ à $RC_8$ de sortie des compteurs de débordement, fournissent les données à écrire dans le registre 36'.

Le registre 36' est validé en écriture par le signal de sortie d'une porte "ET" 37' entre les signaux CKC et $EN_4$. Le signal $EN_4$ permet de forcer le contenu des deux premières cellules du registre 36' ayant changé d'état à leur nouvelle valeur et de ne pas mémoriser les débordements suivant les deux premiers débordements. La porte "ET" 41 reçoit sur une première entrée le signal CV2 et sur une deuxième entrée un signal DRAP fourni par une mémoire morte 42 adressée par les signaux $CV1_1$ à $CVI_8$. Lorsque, dans un premier cas, deux au moins des signaux $CVI_1$ à $CVI_8$ sont dans ledit premier état, c'est-à-dire lorsque les conditions de validité par rapport au seuil de détection sont vérifiées pour deux fréquences au moins, le signal DRAP autorise le passage du signal CV2 à travers la porte 41. Dans ce premier cas, si le signal CV2 indique que les conditions de validité, par rapport à l'écart maximum $E^M$ et à l'écart minimum Em, sont vérifiées, les données inscrites dans la mémoire 38 sont fournies par les signaux $G_1$ à $G_8$ qui indiquent les deux fréquences ayant été reconnues par les premiers et les deuxièmes moyens. Dans les trois autres cas (correspondant aux trois autres combinaisons possibles pour les signaux DRAP et CV2, les données inscrites dans la mémoire 38 sont fournies par les signaux $CVI_1$ à $CVI_8$).

Ces trois autres cas correspondent soit au cas où les conditions de validité par rapport au seuil de détection ont été vérifiées pour deux fréquences au moins, mais où les conditions de validité par rapport à l'écart maximum et à l'écart minimum n'ont pas été vérifiées, soit au cas où les conditions de validité par rapport à l'écart maximum et à l'écart minimum ont été vérifiées, mais où les conditions de validité par rapport au seuil de détection n'ont pas été vérifiées pour deux fréquences au moins, soit au cas où les conditions de validité par rapport au seuil de détection n'ont pas été vérifiées pour deux fréquences au moins, et où les conditions de validité par rapport à l'écart maximum et à l'écart minimum n'ont pas été vérifiées. Le signal $MOR_0$ indique si les données inscrites dans la mémoire 38 proviennent des signaux $CVI_1$ à $CVI_8$, ou des signaux $RC_1$ à $RC_8$.

Les troisièmes moyens comportent également six mémoires mortes 43-1 à 43-6, dites mémoires d'analyse de chacun des six résultats successifs, adressées respectivement par les données lues dans chacune des six mémoires de résultats successifs 36-1 à 36-6, ces données étant fournies respectivement par les signaux $M1R_0$ à $M1R_8$, $M2R_0$ à $M2R_8$, $M3R_0$ à $M3R_8$, $M4R_0$ à $M4R_8$, $M5R_0$ à $M5R_8$ et $M6R_0$ à $M6R_8$. La mémoire morte 43-r a pour but de convertir les signaux $MrR_0$ à $MrR_8$ en un signal $FD_r$ indiquant la présence ou l'absence de fréquence de code multifréquences sur la séquence d'entrée de rang r. Ainsi, dans le premier cas précité, le signal $FD_r$ indique la présence de deux fréquences ayant été reconnues par les premiers et les deuxièmes moyens sur la séquence d'entrée de rang r. En ce qui concerne les trois autres cas précités, le signal $FD_r$ peut indiquer par exemple l'absence de fréquences ayant été reconnues par les premiers et les deuxièmes moyens sur la séquence d'entrée de rang r, ou la présence d'au moins une fréquence ayant été reconnue par les premiers moyens sur la séquence d'entrée de rang r. La programmation de la mémoire morte 43-r dépend des codes multifréquences que le récepteur est apte à recevoir.

Les troisièmes moyens comportent également un circuit 44 de prise en compte de P résultats successifs les plus récents parmi les six résultats successifs les plus récents fournis par les six mémoires d'analyse 43-1 à 43-6, et de détection de coïncidence entre ces P résultats. Le circuit 44 est commandé par les signaux EA et TC. Le circuit 44 fournit un signal CV qui indique la présente ou l'absence de fréquence de code multifréquences sur les P séquences d'entrée successives les plus récentes.

Les troisièmes moyens comportent également une mémoire vive 54, dite mémoire de sortie, adressée par le signal V, validée en écriture par le signal de sortie d'une porte "ET" 55 entre le signal AEMS d'autorisation d'écriture de la mémoire de sortie, fourni par les quatrièmes moyens, le signal FM2 et un signal d'horloge $CK_9$ (visible sur la figure 8). Les données à écrire dans la mémoire de sortie sont constituées par les données lues dans une mémoire morte 56, dite mémoire de code sortant, adressée par un signal formé par la juxtaposition du signal TC et des signaux $MIR_0$ à $MIR_8$. Les données lues dans la mémoire 56 indiquent sous une forme codée utilisable par le signaleur, soit la combinaison de fréquences ayant été reconnue sur la séquence d'entrée la plus récente dans le premier cas de combinaison des signaux CV2 et DRAP précités, soit un code de faute dans les autres cas de combinaisons des signaux CV2 et DRAP précités. Les données lues dans la mémoire vive 54 constituent les données d'entrée d'un registre 57 activé par un signal d'horloge h dont la fréquence est fixée par le rythme de lecture, par l'interface de sortie 5, du signal $S_r$ fourni par le registre 57.

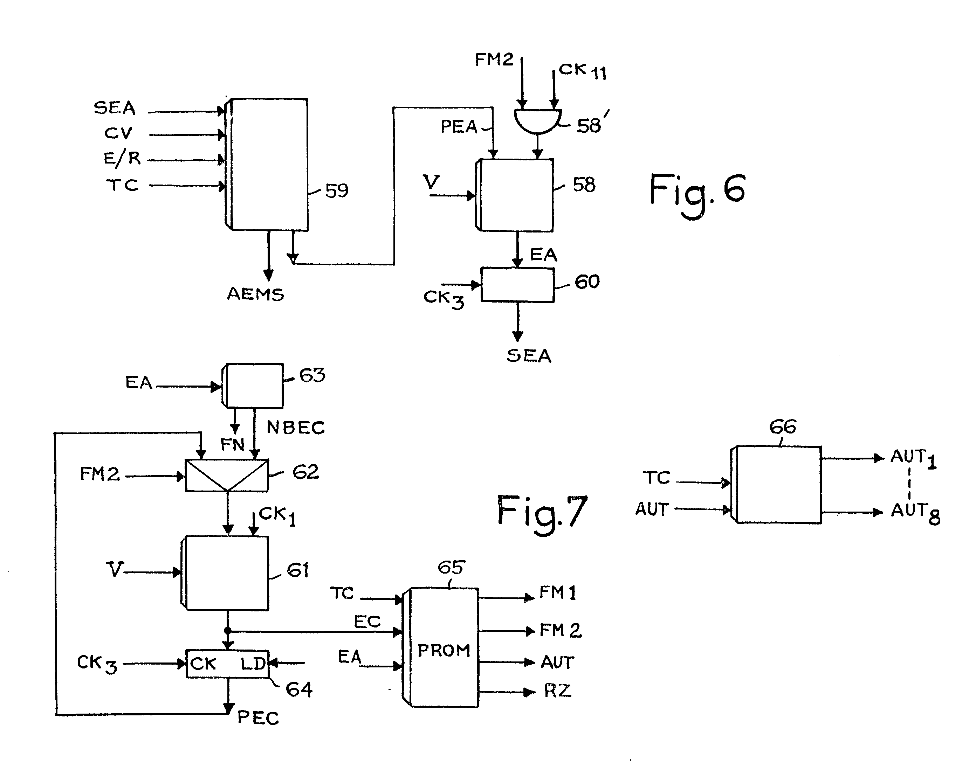

Si l'on se réfère maintenant à la figure 6, on voit que les quatrièmes moyens comportent une mémoire vive 58, dite mémoire d'état actuel d'analyse de la voie v, adressée par le signal V, validée en écriture par le signal de sortie d'une porte "ET" 58' entre le signal FM2 et un signal d'horloge $CK_{11}$ (visible sur la figure 8). Les données à écrire dans la mémoire 58 (signal PEA) sont constituées par les données lues dans une mémoire morte 59, dite mémoire de prochain état d'analyse de la voie v. La mémoire morte 59 est adressée par un signal formé par la juxtaposition des signaux TC, E/R, CV et du signal SEA de sortie d'un registre 60 chargé par le signal EA de sortie de la mémoire vive 58 et activé par le signal d'horloge $CK_3$. La mémoire morte 59 fournit en outre le signal AEMS. Cette mémoire a été préalablement inscrite de manière à assurer l'enchaînement des états d'analyse que l'on décrit maintenant en relation avec la figure 9.

La figure 9 décrit l'enchaînement des différents états dans le procédé de reconnaissance d'un code multifréquences dont les critères de reconnaissance temporels sont définis par une durée maximale $\Theta_1$ d'émission parasite, une durée maximale $\Theta_2$ de coupure parasite, un retard maximal de reconnaissance à l'établissement $\Theta_3$ et un retard maximal de reconnaissance à la retombée $\Theta_4$. Le premier état dans le procédé de reconnaissance de ce code est une analyse préalable (APE) définie par un nombre N égal à $N_0$ et par un nombre P égal à $P_0$. Si une fréquence au moins a été reconnue sur ces $P_0$ séquences d'entrée, c'est-à-dire si l'analyse préalable est positive, le signal CV autorise le passage à un deuxième état qui est une détection de présence de code multifréquences (DPF) correspondant à un nombre N égal à $N_1$, $N_1$ étant supérieur à $N_0$, et à un nombre P égal à un. Sinon, une nouvelle analyse préalable est commandée par l'intermédiaire du signal $\overline{CV}$ inverse du signal CV. Si au cours de l'état DPF, deux fréquences ont été reconnues conformes au Cahier des Charges du code sur la séquence d'entrée la plus récente, le signal CV autorise le passage à un troisième état, qui est une détection d'absence de fréquences de code multifréquences (DAF), défini par un nombre N égal à $N_2$ et par un nombre P égal à $P_2$. Sinon, un nouvel état APE est commandé par l'intermédiaire du signal $\overline{CV}$. Si l'absence des fréquences de code reconnues lors de l'état DPF est détectée lors de l'état DAF sur les $P_2$ séquences d'entrée successives les plus récentes, les fréquences de code reconnues lors de l'état DPF précédent sont considérées comme retombées.

Les nombres $N_0$, $P_0$, $N_1$, $N_2$ et $P_2$ doivent être tels que les conditions suivantes soient vérifiées :

$$(P_0-2)N_0T = \Theta_1$$
$$(P_0+1)N_0T + N_1T < \Theta_3$$
$$(P_2-2)N_2T = \Theta_2$$
$$(P_2+1)N_2T < \Theta_4$$

Le signal CV autorise alors le déroulement d'un nouveau procédé de reconnaissance. Sinon, un nouvel état DAF est commandé par l'inter-médiaire du signal $\overline{CV}$.

Les figures 10a, 10b et 10c illustrent le procédé de reconnaissance à l'aide d'un diagramme de temps des signaux multifréquences dans le cas d'une émission parasite (figure 10a), dans le cas de l'établissement d'une émission de fréquences de code multifréquences (figure 10b) et dans le cas de la retombée d'une émission de fréquences de code multifréquences (figure 10c).

Sur la figure 10a, on a choisi de représenter une émission parasite de fort niveau et de durée maximale, c'est-à-dire égale à $\theta_1$, ce qui est le cas le plus défavorable. On a également choisi, à titre d'exemple, un nombre $P_0$ de séquences d'entrée égal à trois. On voit alors que, en choisissant un nombre N égal à $N_0$ tel que l'égalité $N_0T = \theta_1$ soit vérifiée, sur trois séquences d'entrée successives de durée $N_0T$ disposées de manière quelconque par rapport à l'émission parasite, deux séquences d'entrée au maximum peuvent entraîner une reconnaissance de fréquences, en tenant compte du fait que l'émission parasite a un niveau fort. Une reconnaissance de fréquence est indiquée sur le diagramme des temps par la valeur "un" d'un signal R pendant la durée de ces deux séquences d'entrée. Ceci permet donc de différencier les émissions parasites des émissions utiles de signaux multifréquences. Ce raisonnement peut se généraliser à des valeurs $N_0$ et $P_0$ quelconques. On obtient alors l'égalité $(P_0-2)N_0T = \theta_1$.

Sur la figure 10b, on a choisi de représenter un signal multifréquences de niveau faible, ce qui est le cas le plus défavorable lorsqu'il s'agit de la reconnaissance de l'établissement et on a également choisi une valeur de $P_0$ égale à trois. On voit alors que, pour respecter la condition de retard maximal à la reconnaissance de l'établissement, on doit choisir une valeur de N égale à $N_0$ telle que l'inégalité $4N_0T+N_1T < \theta_3$ soit vérifiée. En effet, en tenant compte du fait que l'on doit prendre en compte trois séquences d'entrée successives pour différencier l'établissement du signal multifréquences d'une émission parasite, et du fait que le signal multifréquences a un niveau faible, c'est-à-dire que la première des trois valeurs du signal R n'est pas forcément égale à "un", on voit qu'il est nécessaire de prendre en compte quatre séquences d'entrée successives pour vérifier la condition de retard maximal à la reconnaissance. De plus, pour tenir compte de l'état DPF qui donne effectivement lieu à l'indication de la combinaison de fréquences reconnues, il est nécessaire d'ajouter à la

valeur $4N_0T$ la durée $N_1T$ de la séquence d'entrée de l'état DPF. Ce raisonnement peut se généraliser à des valeurs $N_0$ et $P_0$ quelconques. On obtient alors l'inégalité $(P_0+1)N_0T+N_1T < \Theta_3$.

On peut tenir le même raisonnement qu'à la figure 10a en ce qui concerne une coupure parasite de durée maximale égale à $\Theta_2$. On obtient alors la condition $(P_2-2)N_2T = \Theta_2$ devant être vérifiée par les valeurs $N_2$ et $P_2$ de l'état DPF.

Sur la figure 10c, on a choisi de représenter un signal multifréquences de fort niveau, ce qui est le cas le plus défavorable lorsqu'il s'agit de la reconnaissance de la retombée et on a choisi une valeur de $P_2$ égale à trois. On voit alors que pour respecter la condition de retard maximum à la reconnaissance de la retombée, on doit choisir une valeur de N égale à $N_2$ telle que l'inégalité $4N_2T < \Theta_4$ soit vérifiée. En effet, en tenant compte du fait que l'on doit prendre en compte trois séquences d'entrée successives de durée $N_2T$ égale à $\Theta_2$ pour différencier la retombée du signal multifréquences d'une coupure parasite et du fait que le signal multifréquences a un niveau fort, c'est-à-dire que la première des trois valeurs de R n'est pas forcément égale à zéro, on voit qu'il est nécessaire de prendre en compte quatre séquences d'entrée successives de durée égale à $N_2T$ pour vérifier la condition de retard maximal à la reconnaissance de la retombée. Ce raisonnement peut se généraliser à des valeurs $N_2$ et $P_2$ quelconques. On obtient alors l'inégalité :

$$(P_2+1)N_2T < \Theta_4$$

Si l'on se reporte maintenant à la figure 6, on voit que le prochain état d'analyse de la voie v (signal PEA) est déterminé connaissant le type de code multifréquences reçu sur la voie v (signal TC), l'état actuel d'analyse de la voie v (signal EA), le résultat de l'analyse actuelle de la voie v (signal CV) et le type de fréquences reçu dans le cas où le code reçu est le code "MF SOCOTEL" (signal E/R).

Le signal EA indique l'état actuel d'analyse de la voie v, c'est-à-dire d'une part le nombre N d'échantillons numériques devant être prélevés sur la voie v des signaux multifréquences reçus actuellement pour être traités par les moyens de filtrage, ainsi que le type de troncature à utiliser par les moyens de filtrage, d'autre part le nombre P de séquences d'entrée successives de N échantillons numériques devant être pris en compte pour l'analyse par les troisièmes moyens.

Le signal PEA indique le prochain état d'analyse de la voie v, c'est-à-dire d'une part le prochain nombre N' d'échantillons numériques prélever sur la voie v des signaux multifréquences, ainsi que le prochain type de troncature à utiliser par les moyens de filtrage, d'autre part le prochain nombre P' de séquences d'entrée successives de N' échantillons à prendre en compte pour l'analyse par les troisièmes moyens.

Le signal AEMS est actif pour les états d'analyse DPF et DAF, ce qui signifie que ces états d'analyse donnent lieu, soit à l'indication des fréquences reconnues (pour l'état DPF), soit à l'indication de la retombée des fréquences reconnues (pour l'état DAF). Le signal AEMS n'est pas actif pour l'état d'analyse préalable APE.

Si l'on se réfère maintenant à la figure 7, on voit que les cinquièmes moyens comportent une mémoire vive 61, dite mémoire de numéro d'échantillon m reçu actuellement par le dispositif de reconnaissance, adressée par le signal V, validée en écriture par le signal d'horloge $CK_1$. Les données à écrire dans la mémoire 61 sont fournies par un multiplexeur 62 à deux entrées dont une première entrée reçoit les données lues (signal NBEC) dans une mémoire morte 63, dite mémoire de nombre actuel N d'échantillons numériques, adressée par le signal EA, dont une deuxième entrée reçoit le signal PEC de sortie d'un circuit d'incrémentation de numéro d'échantillon constitué par un compteur 64 chargé par les données lues dans la mémoire 61 (signal EC). Le multiplexeur 62 est commandé par le signal FM2. La mémoire morte 63 fournit également le signal FN correspondant au type de troncature. Le compteur 64 est activé par le signal d'horloge $CK_3$ et son chargement est commandé par un signal d'horloge $CK_4$ (visible sur la figure 8). L'ensemble formé par la mémoire vive 61, le multiplexeur 62, la mémoire morte 63 et le compteur 64 fournit à partir du signal d'entrée EA, un signal de sortie EC indiquant le numéro m de l'échantillon numérique reçu par le dispositif de reconnaissance sur les Q séquences de sortie. Lorsque m est égal à M, ce qui correspond à la fin du traitement par le dispositif de reconnaissance des Q séquences de sortie correspondant à une séquence d'entrée donnée, le signal FM2 commande l'écriture dans la mémoire 61 du signal NBEC correspondant au nombre N d'échantillons de la séquence d'entrée suivante. Et tant que le numéro m de l'échantillon traité par le dispositif de reconnaissance sur les Q séquences de sortie correspondant à cette séquence d'entrée suivante est inférieur à M, le signal FM2 commande l'écriture dans la mémoire 61 du signal PEC correspondant au nombre m + 1.

Le signal FM2 est fourni par un circuit de décodage de la valeur m = M constitué par une mémoire morte 65 adressée par les signaux EC, EA et TC.

Les cinquièmes moyens comportent aussi un circuit de décodage de la valeur m = M - 1, constitué également par la mémoire morte 65 qui est apte à fournir le signal FM1 qui est actif lorsque m est égal à M - 1.

De plus les cinquièmes moyens comportent un circuit de décodage des valeurs m = N et m = M - 2, constitué également par la mémoire morte 65, apte à fournir un signal AUT qui est actif pour les valeurs de m comprises entre N et M - 2. La mémoire morte 65 fournit également un signal RZ qui est actif pour les valeurs de m inférieurs à N et qui est utilisé pour la remise à zéro des mémoires de plus grand échantillon.

Les cinquièmes moyens comportent également un circuit d'inhibition des fréquences non utilisées dans le code multifréquences reçu, constitué par une mémoire morte 66 adressée par les signaux TC et AUT. La mémoire morte 66 fournit les signaux $AUT_1$ à $AUT_8$ de validation des mémoires de plus grand échantillon dont le rang coïncide avec le rang des fréquences utilisées dans le code multifréquences reçu.

On voit donc, d'après la figure 7, que les premiers et les deuxièmes moyens sont activés entre les valeurs m = N et m = M - 2, période comportant un nombre d'échantillons variable selon la valeur de N, que les troisièmes moyens sont activés à la valeur m = M - 1, et que les quatrièmes moyens sont activés à la valeur m = M, (la durée de traitement par les troisièmes et les quatrièmes moyens étant inférieure à la durée d'un échantillon).

Si l'on se réfère maintenant à la figure 8, on voit que les signaux d'horloge $CK_1$, $CK_3$, $CK_4$, $CK_9$, $CK_{10}$, $CK_{11}$, $CK_{13}$, $CK_{14}$, $CK_{15}$, $CK_{16}$ et $CK_{17}$ sont obtenus à partir d'un signal d'horloge de base $CK_0$ périodique. Le signal d'horloge de base $CK_0$ fournit 47 impulsions pendant la durée allouée au traitement de chaque échantillon reçu par le dispositif de reconnaissance. Le signal d'horloge $CK_1$ présente une impulsion qui coïncide avec la 47ème impulsion du signal d'horloge $CK_0$. Le signal d'horloge $CK_3$ présente une impulsion qui coïncide avec la 2ème impulsion du signal d'horloge $CK_0$. Le signal d'horloge $CK_4$ présente une impulsion qui coïncide avec la 1ère impulsion du signal d'horloge $CK_0$. Le signal d'horloge $CK_9$ présente une impulsion qui coïncide avec la 18ème impulsion du signal d'horloge $CK_0$. Le signal d'horloge $CK_{10}$ présente une impulsion qui coïncide avec la 46ème impulsion du signal d'horloge $CK_0$. Le signal d'horloge $CK_{11}$ présente une impulsion qui coïncide avec la 35ème impulsion du signal d'horloge $CK_0$. Le signal d'horloge $CK_{13}$ présente une impulsion qui coïncide avec la 7ème impulsion du signal d'horloge $CK_0$. Le signal d'horloge $CK_{14}$ présente une impulsion qui coïncide avec la 6ème impulsion du signal d'horloge $CK_0$. Le signal d'horloge $CK_{15}$ présente une impulsion qui coïncide avec la 5ème impulsion du signal d'horloge $CK_0$. Le signal d'horloge $CK_{16}$ présente une impulsion qui coïncide avec la 4ème impulsion du signal d'horloge $CK_0$. Le signal d'horloge $CK_{17}$ présente une impulsion qui coïncide avec la 3ème impulsion du signal d'horloge $CK_0$.

Les impulsions des signaux d'horloge fournis par le séquenceur 8 sont aptes à activer successivement les premiers, les deuxièmes, les troisièmes, les quatrièmes et les cinquièmes moyens pour chaque échantillon reçu par le dispositif de reconnaissance. Mais ce n'est que lorsque ces moyens auront reçu également les signaux de validation fournis par les cinquièmes moyens aptes à activer successivement les premiers, les deuxièmes, les troisièmes, et les quatrièmes moyens pour le traitement de chaque voie v par le dispositif de reconnaissance, qu'ils seront effectivement activés.

# 0011018

REVENDICATIONS

1. Dispositif de reconnaissance pour récepteur numérique de signaux multifréquences à modulation par impulsions codées - ledit récepteur mettant en oeuvre des moyens de filtrage numérique qui traitent indépendamment l'une de l'autre des séquences d'entrées successives de N échantillons numériques prélevés sur une même voie v des signaux multifréquences, et qui sont aptes à fournir, en réponse à une séquence d'entrée donnée, Q séquences de sortie simultanées de M échantillons numériques, M étant le nombre d'échantillons nécessaires au traitement de la voie v par le dispositif de reconnaissance (M > N), dont M-N échantillons numériques sinusoïdaux de fréquence $f_q$, $f_q$ étant l'une des Q fréquences du code multifréquences présentes dans la séquence d'entrée donnée - comportant des premiers moyens pour contrôler, pour chaque voie v, la validité par rapport à un seuil de détection donné de la valeur crête des échantillons numériques sinusoïdaux des Q séquences de sortie, ce dispositif de reconnaissance étant caractérisé en ce qu'il comporte :

- des deuxièmes moyens pour contrôler, pour chaque voie v, la validité par rapport à un écart maximum et à un écart minimum donnés, des écarts respectifs entre la première et la deuxième, et entre la deuxième et la troisième valeurs crêtes de plus grandes valeurs parmi les Q séquences de sortie ;

- des troisièmes moyens pour analyser, pour chaque voie v, P résultats successifs obtenus par les premiers et les deuxièmes moyens sur les P séquences d'entrée successives de N échantillons numériques les plus récentes, ces troisièmes moyens étant aptes à indiquer la combinaison de fréquences ayant été reconnue sur ces P séquences d'entrée, l'analyse de ces P séquences d'entrée ayant pour but de s'affranchir des émissions et des coupures parasites ;

- des quatrièmes moyens pour déterminer, en fonction des résultats fournis par les troisièmes moyens et de l'état actuel d'analyse de la voie v, le prochain état d'analyse de la voie v, c'est-à-dire le prochain nombre N' d'échantillons numériques à prendre en compte par les moyens de filtrage et le prochain nombre P' de séquences d'entrée successives de N' échantillons numériques à prendre en compte par les troisièmes moyens, et pour autoriser les troisièmes moyens à indiquer la combinaison de fréquences ayant été reconnue ;

- des cinquièmes moyens pour activer successivement, pour le traitement de chaque voie v par le dispositif de reconnaissance, les premiers, les deuxièmes, les troisièmes et les quatrièmes moyens en fonction du numéro m ($1 \leqslant m \leqslant M$) de l'échantillon des Q séquences de sortie reçu par le dispositif de reconnaissance puis, lorsque m est égal à M, pour activer les moyens de filtrage pour le traitement de la séquence d'entrée suivante.

2. Dispositif selon la revendication 1, caractérisé en ce que les premiers moyens comportent :

- premièrement un circuit de détection de la valeur crête des échantillons numériques sinusoïdaux de chaque voie v des Q séquences de sortie, comportant lui-même Q mémoires vives, dites mémoires de plus grand échantillon de chaque voie, adressées par le numéro v de la voie actuellement traitée par le dispositif de reconnaissance, la mémoire de plus grand échantillon de rang q ($1 \leqslant q \leqslant Q$) étant validée en écriture par le signal de sortie d'un circuit de coïncidence entre un signal de validation de cette mémoire et une condition de supériorité des données reçues sur la voie v de la séquence de sortie de rang q par rapport aux données lues dans la mémoire de plus grand échantillon de rang q,

- deuxièmement un circuit de contrôle de validité, par rapport au seuil de détection, de la valeur crête des échantillons numériques sinusoïdaux des Q séquences de sortie, comportant lui-même Q comparateurs, le comparateur de rang q comparant les données lues dans la mémoire de plus grand échantillon de rang q avec les données lues dans une mémoire morte, dite mémoire de seuil de détection, adressée par le type de code multifréquences reçu sur la voie v, la sortie du comparateur de rang q étant dans un premier état en cas de supériorité des données lues dans la mémoire de plus grand échantillon de rang q.

3. Dispositif selon les revendications 1 et 2, caractérisé en ce que les deuxièmes moyens comportent :

- premièrement un circuit de détection de première, deuxième et troisième valeurs crêtes de plus grandes valeurs parmi les Q séquences de sortie constitué d'une part par Q compteurs identiques, dits compteurs de débordement, incrémentés par un même signal d'horloge, le compteur de débordement de rang q étant chargé par les données lues dans la mémoire de plus grand échantillon de même rang q, d'autre part par un circuit de détection de débordement apte à détecter les compteurs de débordement dont la sortie de débordement a changé d'état et à fournir un signal de détection de première, de deuxième et de troisième valeurs crêtes respectivement lorsqu'un premier, un deuxième et

24 **0011018**

un troisième débordements ont été détectés,

- deuxièmement un circuit de détection de validité par rapport à l'écart maximum, comportant lui-même un compteur, dit compteur d'écart maximum, chargé par les données lues dans une mémoire morte, dite mémoire d'écart maximum adressée par un signal formé par la juxtaposition du type de code multifréquences reçu sur la voie v actuellement traitée par le dispositif de reconnaissance et de l'état actuel d'analyse de la voie v, décrémenté à chaque incrémentation des compteurs de débordement, autorisé à se décrémenter par le signal de détection de première valeur crête, dont la décrémentation est arrêtée par le signal de détection de deuxième valeur crête, la sortie de débordement du compteur d'écart maximum indiquant la validité par rapport à l'écart maximum, de l'écart entre la première et la deuxième valeurs crêtes,

- troisièmement un circuit de détection de validité par rapport à l'écart minimum, comportant lui-même un compteur, dit compteur d'écart minimum, chargé par les données lues dans une mémoire morte, dite mémoire d'écart minimum, adressée par un signal formé par la juxtaposition du type de code multifréquences recu sur la voie v actuellement traitée par le dispositif de reconnaissance et de l'état actuel d'analyse de la voie v, décrémenté à chaque incrémentation des compteurs de débordement, autorisé à se décrémenter par le signal de détection de deuxième valeur crête, dont la décrémentation est arrêtée par le signal de détection de troisième valeur crête, la sortie de débordement du compteur d'écart minimum indiquant la validité, par rapport à l'écart minimum, de l'écart entre la deuxième et la troisième valeurs crêtes.

4. Dispositif selon la revendication 3, caractérisé en ce qu'il est prévu un compteur d'écart par rapport au seuil de détection, chargé par les données lues dans une mémoire morte, dite mémoire d'écart par rapport au seuil de détection, adressée par un signal formé par la juxtaposition du type de code multifréquences reçu sur la voie v actuellement traitée par le dispositif de reconnaissance et de l'état actuel d'analyse de la voie v, décrémenté à chaque incrémentation des compteurs de débordement, la sortie de débordement du compteur d'écart par rapport au seuil de détection indiquant la validité, par rapport à l'écart minimum, de l'écart entre la deuxième et la troisième valeurs crêtes, dans le cas où le niveau de la troisième valeur crête est inférieur au seuil de détection.

0011018

5. Dispositif selon la **revendication** 3 ou la revendication 4, caractérisé en ce qu'il est prévu une mémoire morte, dite mémoire de protection contre les réjections, adressée par un signal formé par la juxtaposition du type de code reçu sur la voie v et d'un signal d'émission-réception, apte à fournir les signaux de validation des compteurs de débordement dont le rang q diffère du rang des fréquences de réjection.

6. Dispositif selon les revendications 1, 2 et 3, caractérisé en ce que les troisièmes moyens comportent :

- premièrement R mémoires vives (R étant égal au nombre maximum de séquences d'entrées successives à prendre en compte par les troisièmes moyens) dites mémoires de résultats successifs, adressées par le numéro v de la voie actuellement traitée par le dispositif de reconnaissance, validées en écriture par un signal de validation des mémoires de résultats successifs, connectées en série de manière que les données lues dans la mémoire de résultats successifs de rang r ($1 \leqslant r \leqslant R - 1$) constituent les données lues à écrire dans la mémoire de résultats successifs de rang $r + 1$, les données lues à écrire dans la mémoire des résultats successifs de rang $r = 1$ étant constituées par les données lues dans une mémoire vive, dite mémoire de contrôle de validité, adressée par le numéro v de la voie actuellement traitée par le dispositif de reconnaissance, validée en écriture par un signal de validation de la mémoire de contrôle de validité, les données à écrire dans la mémoire de contrôle de validité étant constituées soit par les données fournies par les sorties de débordement des deux premiers compteurs de débordement dont la sortie de débordement a changé d'état, dans le cas où les sorties de débordement des compteurs d'écart maximum et minimum ont changé d'état au cours des contrôles de validité par les deuxièmes moyens et où les sorties de deux au moins des Q comparateurs sont dans ledit premier état, soit par les données de sortie des Q comparateurs dans tous les autres cas,

- deuxièmement R mémoires mortes, dites mémoires d'analyse de chacun des R résultats successifs, la mémoire d'analyse de rang r étant adressée par les données lues dans la mémoire de résultats successifs de même rang r, les données lues dans la mémoire d'analyse de rang r indiquant la présence ou l'absence de fréquence de code multifréquences sur la séquence d'entrée de rang r,

- troisièmement un circuit de prise en compte de P résultats successifs les plus récents parmi les R résultats successifs les plus récents fournis par les R mémoires d'analyse et de détection de coïncidence entre ces P résultats, commandé par le type de code multifréquences reçu sur la voie v et par l'état actuel d'analyse de la voie v, les données fournies par ce circuit indiquant la présence ou l'absence de code multifréquences sur les P séquences d'entrée successives les plus récentes,

- quatrièmement une mémoire vive, dite mémoire de sortie, adressée par le numéro v de la voie actuellement traitée par le dispositif de reconnaissance, validée en écriture par un signal de validation de la mémoire de sortie, les données à écrire dans la mémoire de sortie étant constituées par les données lues dans une mémoire morte, dite mémoire de code sortant, adressée par un signal formé par la juxtaposition du type de code reçu sur la voie v et des données lues dans la mémoire de résultats successifs de rang r égal à un, les données lues dans la mémoire de sortie indiquant la combinaison de fréquences ou le code de faute ayant été reconnu par les premiers et les deuxièmes moyens sur les P séquences d'entrées successives les plus récentes.

7. Dispositif selon les revendications 1 et 6, caractérisé en ce que les quatrièmes moyens comportent une mémoire vive, dite mémoire d'état actuel d'analyse de la voie v, adressée par le numéro de la voie v traitée actuellement par le dispositif de reconnaissance, validée par un signal de validation de la mémoire d'état actuel, les données à écrire dans la mémoire d'état actuel étant constituées par les données lues dans une mémoire morte, dite mémoire de prochain état d'analyse de la voie v, adressée elle-même par un signal formé par la juxtaposition premièrement des données lues dans la mémoire d'état actuel, deuxièmement des données de sortie du circuit de prise en compte des P résultats et de détection de coïncidence entre ces P résultats, troisièmement du type de code multifréquences reçu sur la voie v, les données lues dans la mémoire d'état actuel indiquant l'état actuel d'analyse de la voie v, cet état actuel étant défini par un nombre N d'échantillons numériques et par un nombre P de séquences d'entrée déterminés, les données lues dans la mémoire de prochain état indiquant le prochain état d'analyse de la voie v, ce prochain état étant défini par un nombre N' d'échantillons numériques et par un nombre P' de séquences d'entrée déterminés, les données lues dans la mémoire d'état actuel fournissant d'autre part le signal de validation de la mémoire de sortie.

8. Dispositif selon les revendications 1, 2, 3 et 7, caractérisé en ce que les cinquièmes moyens comportent :

- premièrement une mémoire vive, dite mémoire de numéro d'échantillon m reçu par le dispositif de reconnaissance, adressée par le numéro v de la voie traitée actuellement par le dispositif de reconnaissance, les données à écrire dans cette mémoire étant constituées, soit par les données lues dans une mémoire morte, dite mémoire de nombre actuel N d'échantillons numériques, adressée par les données lues dans la mémoire d'état actuel, soit par les données de sortie d'une sortie d'un circuit d'incrémentation de numéro d'échantillon, selon que le numéro m de l'échantillon reçu par le dispositif de reconnaissance est, ou non, égal à M,

- deuxièmement un circuit de décodage des valeurs $m = N$ et $m = M - 2$, apte à fournir le signal de validation des mémoires de plus grand échantillon entre les valeurs $m = N$ et $m = M - 2$,

- troisièmement un circuit d'inhibition des fréquences inutilisées apte à fournir le signal de validation des mémoires de plus grand échantillon à celles dont le rang q diffère du rang des fréquences utilisées,

- quatrièmement un circuit de décodage de la valeur $m = M - 1$, apte à fournir le signal de validation de la mémoire de contrôle de validité,

- cinquièmement un circuit de décodage de la valeur $m = M$, apte à fournir les signaux de validation des mémoires de résultats successifs et de la mémoire d'état actuel et à sélectionner les données à écrire dans la mémoire de numéro d'échantillon.

9. Procédé de reconnaissance d'un code multifréquences dont les critères de reconnaissance temporels sont définis par des durées maximales $\Theta_1$ et $\Theta_2$ d'émissions et de coupures parasites, par un retard maximal de reconnaissance à l'établissement $\Theta_3$ et par un retard maximal de reconnaissance à la retombée $\Theta_4$ pour la mise en oeuvre du dispositif selon la revendication 1, caractérisé en ce qu'il comporte les états d'analyse suivants :

- une analyse préalable, définie par un nombre N égal à $N_0$ et par un nombre P égal à $P_0$, cette analyse préalable étant destinée à s'affranchir des émissions parasites, ne donnant pas lieu à une indication de la combinaison de fréquences reconnue sur ces $P_0$ séquences, et étant renouvelée si elle est négative ;

- dans le cas où l'analyse préalable est positive, une détection de présence de fréquences de code multifréquences définie par un nombre N égal à $N_1$, $N_1$ étant supérieur à $N_0$ et par un nombre P égal à un ; cette détection de présence donnant lieu à une indication de la combinaison de fréquences reconnue et étant suivie par une nouvelle analyse préalable si elle est négative ;

- dans le cas où la détection de présence de fréquences de code multifréquences est positive, une détection d'absence de fréquences de code multifréquences, définie par un nombre N égal à $N_2$ et par un nombre P égal à $P_2$, cette détection étant destinée à s'affranchir des coupures parasites, donnant lieu à une indication de la retombée des fréquences formant la combinaison reconnue, et étant renouvelée si elle est négative,

les valeurs $N_0$, $P_0$, $N_1$, $N_2$ et $P_2$ étant telles que les conditions :

$$(P_0-2)N_0T = \Theta_1$$

$$(P_0+1)N_0T + N_1T < \Theta_3$$

$$(P_2-2)N_2T = \Theta_2$$

$$(P_2+1)N_2T < \Theta_4$$

où T est la période d'échantillonnage des signaux multifréquences, soient vérifiées.

Fig.1

Fig.2

2/8

0011018

Fig. 3

3/8

0011018

Fig. 4

0011018

Fig.5

Fig. 6

Fig. 7

0011018

Fig.8

7/8

0011018

0011018

Fig.9

Fig.10a

Fig.10b

Fig.10c

| Catégorie | Citation du document avec indication, en cas de besoin, des parties pertinentes | Revendication concernee | CLASSEMENT DE LA DEMANDE (Int. Cl.) |
|---|---|---|---|
| | **DOCUMENTS CONSIDERES COMME PERTINENTS** | | |
| | FR - A - 2 374 808 (SELT)<br><br>* Page 8, ligne 33 - page 10, ligne 29 *<br><br>-- | 1 | H 04 Q 1/457 |
| | FR - A - 2 295 665 (LCT)<br><br>* Page 1, ligne 28 - page 2, ligne 19; page 8, ligne 18 - page 9, ligne 3; page 9, ligne 24 - page 10, ligne 4 *<br><br>--- | 1 | |

**DOMAINES TECHNIQUES RECHERCHES (Int. Cl.)**

H 04 Q 1/457

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 12-12-1979 | VERSLYPE |

OEB Form 1503.1   06.78